# EUROPEAN PATENT SPECIFICATION

(11) **EP 0 434 081 B1**
(45) Date of publication and mention of the grant of the patent: **20.03.1996**
(21) Application number: 90125077.9
(22) Date of filing: 21.12.1990
(51) Int. Cl.: G06F 11/30, G06F 11/34

(54) **Monitor apparatus for selectively detecting signal conditions at points in an operating system**
Überwachungsgerät zur selektiven Feststellung von einem Signalzustand in einem Betriebssystem
Appareil de surveillance pour la détection sélective de l'état de signaux dans un système opérationnel

(30) Priority: 22.12.1989 US 455664; 22.12.1989 US 455666; 22.12.1989 US 455667; 22.12.1989 US 455668
(43) Date of publication of application: 26.06.1991
(73) Proprietor: Bull HN Information Systems Inc., Billerica, MA 01821-4186 (US)
(72) Inventor: De Angelis, Douglas John, Woburn, Mass. 01801 (US); Maddox, Henry Walter Jerome, Franklin, Mass. 02038 (US); Peters, Arthur, Sudbury, Mass. 01776 (US); Rathbun, Donald James, Methuen, Mass. 01844 (US); Saltmarsh, William Lawrence, Brockton, Mass. 02401 (US)
(74) Representative: Altenburg, Udo, Dipl.-Phys.

(56) References cited:
- EP-A- 0 260 502
- US-A- 4 872 121
- TEKSCOPE. Vol. 14, no. 1, March 1982, VOORSCHOTEN NL pages 12 - 14; N.N.: '' A new real-time debugging tool for the 8500 series MDL'

## Description

### Background of the Invention

The present invention relates to monitoring the operation of computer systems and, more particularly, to apparatus for selectively detecting signal conditions at points in an operating system and for recording said conditions.

### Prior Art

A recurring problem in monitoring the performance and operation of computer systems, for example, the states appearing on system buses during operation, is the ability of the user of a monitoring apparatus to selectively capture the conditions to be monitored and detected. For example, the user of a monitoring apparatus of the prior art generally has the ability to capture all of the events occurring from a single source within a given time after initiation of the monitoring process, but not the ability to selectively capture information related to specific, selected events that might occur independently from several sources and at any time after start of the monitoring. That is, the monitoring apparatus of the prior art operates in much the same manner as a tape recorder, turn it on and it records everything that happen until it runs out of tape. Unless, therefore, the storage capabilities of a monitoring device are impracticably large, the user has difficulty in capturing events that may occur only at infrequent intervals or only long after the monitoring process has started and may not, in fact, capture the events of interest because the monitoring device's data recording apparatus becomes saturated, or filled with data. This is particularly true in the case of events which are either intermittent, such as certain types of failures, or which happen only infrequently in the normal operation of a system. In addition, and contributing to the problem, the monitoring devices of the prior art are generally not capable of selectively defining and capturing events of interest, but must capture much data which is not of interest in order to capture the data that is of interest, and cannot monitor events from a variety of sources, making repetitive monitoring operations necessary to establish correlations between events at various sources.

US-A-4 872 121 discloses a system activity monitor for monitoring the performance of a computer system, in which a single event occurrence is decisive for triggering data acquisition.

### Objects and Summary of the Invention

It is therefore the object of the present invention, as defined in the claims, to provide an improved monitor apparatus for monitoring and recording the conditions occurring in a system during operation by providing means with the ability of selectively detecting and capturing independently occurring events from multiple sources.

The above object is achieved in a monitor apparatus comprising a condition sensing circuit coupled to a first set of points in said system for sensing predetermined signal conditions at said first set of points and for generating first-type output signals upon the occurrence of said predetermined conditions, an enabling circuit for storing a plurality of codes corresponding to different ones of said first-type output signals and for delivering second-type output signals representing said codes, and a detecting circuit coupled to said condition sensing circuit and to said enabling circuit and responsive to said first-type and second-type signals for generating third-type output signals upon the occurrence of first-type output signals corresponding to said second-type output signals. In order to provide for the recording of signal conditions at certain points in said operating system, storage means are coupled to a second set of points in said system and to said detecting circuit, which are responsive to said third-type output signals for recording representations of the signal conditions present at said second set of points.

The foregoing and other objects, features and advantages of the present invention will be apparent from the following description of an embodiment of the monitor apparatus, as illustrated in the accompanying figures, wherein:

### Brief Description of the Drawings

Fig. 1 is a block diagram of a system incorporating the bus monitor of the present invention;
Fig. 2 is a block diagram of the bus monitor of the present invention;
Fig. 3 is a diagrammatic representation of the trigger enabling means of the present invention;
Fig. 4 is a block diagram of a trigger memory of the present invention;
Fig. 5 is a diagrammatic representation of the generation and storing of trigger patterns in the trigger memory of the present invention; and
Fig. 6 shows configurations of data residing in the silo banks.

### Description Of Preferred Embodiments

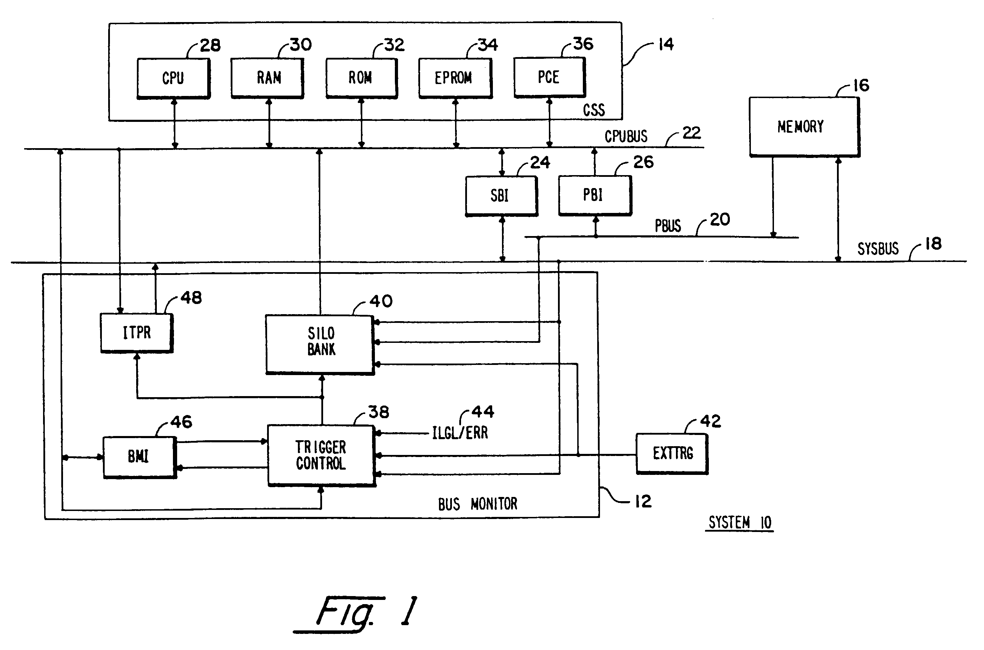

### A. General Description (Fig. 1)

Referring to Fig. 1, therein is represented a block diagram of an exemplary System 10 incorporating a Bus Monitor 12 of the present invention. As shown, System 10 includes at least one Central System 14, which performs information processing operations, and a Memory 16 for storing programs and data. CSS 14, Memory 16 and other elements of the system, such as other Central Systems and memories, and input and output controllers, through a System Bus (SYSBUS). System buses such as SYSBUS 18 are well known in the art and an example of such could be the MEGABUS* (*MEGABUS is a trademark of Bull HN Information Systems Inc.) used in Bull HN Information System's DPS6 and MRX computer systems.

In addition, System 10 includes a Private Bus (PBUS) which is connected between Memory 16 and CSS 14 and which is used solely to communicate information, that is, program instructions and data, from Memory 16 to CSS 14. While not a part of or a limitation of the present invention, PBUS 20 is representative of the special purpose buses often found in computer systems and, in System 10, is provided to enhance the speed with which information may be read from Memory 14 to CSS 12. In system 10, memory write operations are executed completely on SYSBUS 18 in the usual manner and certain memory read operations may be executed entirely through SYSBUS 18 in the usual manner. Many memory read operations, however, are of blocks of words, for example, of blocks of eight double words. In these block read operations, the read command and starting address of the block to be read are provided to Memory 16 through SYSBUS 18, in the usual manner for a read operation, and the block of words is then read from Memory 16 to CSS 14 through PBUS 20 as a burst of eight double words. The speed of the block read operation is thereby enhanced by avoiding the more complex and slower protocols used in communicating through general purpose SYSBUS 18.

As shown in Fig. 1, CSS 14 has associated with it a Central Processing Unit Bus (CPUBUS) 22 for communication among the elements of CSS 14 and SYSBUS 18 and PBUS 20 communicate with CPUBUS 22 through, respectively, a bidirectional SYSBUS Interface (SBI) 24 and a unidirectional PBUS Interface (PBI) 26.

CSS 14 is in turn comprised of a number of elements, including a Central Process Unit (CPU) 28 which, in the present embodiment of System 10, may be an Intel 80386 microprocessor, which is well known to those of ordinary skill in the art. CPUBUS 22 accordingly is a standard 32 bit 80386 bus using the 80 386 data, instruction and command formats and executing the 80386 bus protocols and procedures.

Associated with CPU 28 are a local Random Access Memory (RAM) 30 for use by CPU 28, such as storing data and instructions, a Read Only Memory (ROM) 32 used, for example, to store system boot programs, and an Erasable Programmable Read Only Memory (EPROM) 34 which is related to Bus Monitor 12 and will be discussed further below. Finally, CSS 14 includes a number of other CPU 28 related elements, generally referred to as Process and Communication Elements (PCE) 36, which may include such well known functions as interrupt handling logic and communications controllers, such as disk drive controllers and serial and parallel port controllers.

Referring now to Bus Monitor 12, as previously described, the function of Bus Monitor 12 is to continuously monitor the conditions present at a first set of selectable monitored points while System 10 is in operation. As will be described, those points include System 10's buses, most particularly SYSBUS 18, and may include Memory 16 and certain other selected points inside or outside System 10.

Should Bus Monitor 12 detect any of a number of preselected trigger conditions occurring at one or more of this first set of points, Bus Monitor 12 will generate a trigger output indicating the occurrence of that condition. Such a condition, or a selectable time sequence of such triggers, will cause the sampling and storing of the states then present at a second set of selectable sampled points for subsequent examination. As will be described, the second set of points may include some or all of the first set of points, such as the signals present on SYSBUS 18, and may include further points in System 10, such as PBUS 20.

The major functional blocks of Bus Monitor 12 include a Trigger Control 38 and a Silo Bank 40. Trigger Control 38 has inputs comprising the first set of monitored conditions. As indicated, these Trigger Control 38 inputs are connected from SYSBUS 18, from selectable External Triggers (EXTTRG) 42, and from Illegal/Error Condition Triggers (ILGL/ERR) 44. As will be described, Trigger Control 38 is programmable to detect certain conditions, that is, combinations, patterns or sequences of states or signals occurring in the monitored inputs, and to generate corresponding trigger outputs indicating the detection of one or more of the programmably selected conditions. These triggers may be used directly to initiate the sampling of the conditions then present on the monitored points of System 10, or Trigger Control 38 may also be programmed to generate an output upon a selected time sequential occurrence of triggers.

Bus Monitor 12 is programmed through CSS 14 and, as shown, Trigger Control 38 is bidirectional connected to CPUBUS 22 through Bus Monitor Interfaces (BMI) 46. This connection allows CSS 14 to write selected trigger conditions into Trigger Control 38 and to read the state of Trigger Control 38.

Silo Bank 40 comprises the memory for storing, or recording, the sampled conditions present in System 10 when a trigger condition is detected by Trigger Control 38 and accordingly has a sample control input connected from Trigger Control 38. The data inputs of Silo Bank 40 are connected from the second set of selected sample points and include, as shown in Fig. 1, the data, command and address lines of SYSBUS 18, the lines of PBUS 20, the set of selectable external points from EXTTRG 42. As will be described, the sample inputs of Silo Bank 40 further include a time stamp generated by Trigger Control 38.

Silo Bank 40 in turn has data outputs connected to CPUBUS 22, so that the contents of Silo Bank 40 may be read to CSS 14 for examination or transfer to other destinations, such as a remote monitoring facility.

Finally, Bus Monitor 12 has a set of Interrupt/ Pattern Programmable Registers (IPPR) 48 connected from CPUBUS 22 and to SYSBUS 18. In a first mode, IPPR 48 is used by CSS 14 to test SYSBUS 18 and system elements connected from SYSBUS 18 by allowing CSS 14 to write test patterns onto SYSBUS 18 through IPPR 48 under the control of CSS 14. In the bus monitor related mode, CSS 14 may write selected commands into IPPR 48, such as a system or CPU interrupt command, and store the command in IPPR 48 until the command is written onto SYSBUS 18 by the occurrence of a trigger output from Trigger Control 38.

Having described the overall structure and operation of a System 10 incorporating a Bus Monitor 12 of the present invention, and the general structure and operation of Bus Monitor 12, the following will describe Bus Monitor 12 in further detail.

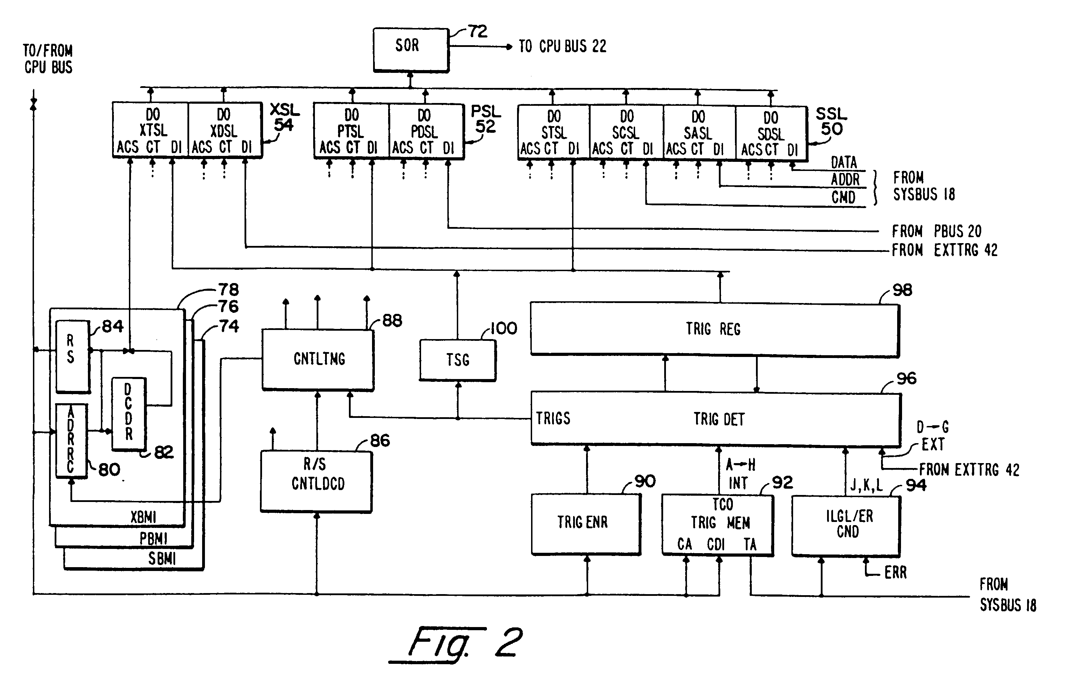

### B. Bus Monitor 12 (Fig. 2)

### B.1 Silo Bank 40

Referring to Fig. 2, therein is shown a more detailed block diagram of Bus Monitor 12, with the exception of IPPR 48.

Located across the top of Fig. 2 is Silo Bank 40 which, as shown, is comprised of three sub-silos, each corresponding to a point in System 10 whose condition, or state, is to be recorded upon the occurrence of a corresponding trigger output from Trigger Control 38. As shown, these sub-silos comprise a SYSBUS Silo (SSL) 50, a PBUS Silo (PSL) 52, and an External Trigger Silo (XSL) 54. Each of these sub-silos is in turn comprised of three silo segments, each segment being assigned to the recording of a particular set of conditions from the corresponding point in System 10. As shown, SSL 50 is comprised of a SYSBUS Data Silo (SDSL) 56, a SYSBUS Address Silo (SASL) 58, a SYSBUS Command Silo (SCSL) 60, and a SYSBUS Time Stamp Silo (STSL) 62. PSL 52 is comprised of a PBUS Data Silo (PDSL) 64 and a PBUS Time Stamp Silo (PTSL) 66 while XTSL 54 is comprised of an External Data Silo (XDSL) 68 and an External Time Stamp Silo (XTSL) 70.

SDSL 56, SASL 58, SCSL 60 and STSL 62 have data inputs connected from, respectively, the data, address and command lines of SYSBUS 18 and the output of a time stamp generator. PDSL 64 and PTSL 66 have data inputs connected from, respectively, the lines of PBUS 20 and the time stamp generator, while XDSL 68 and XTSL 70 have data inputs connected, respectively, from the external sample points, for example, EXTTRG 42, and, again, the time stamp generator. The data inputs of SSL 50, PSL 52 and XSL 54 are also connected, as described=bed further below, from Trigger Control 38, so that SSL 50, PSL 52 and XSL 54 may receive and store the triggers initiating the sampling operations, and information relating to the triggers initiating the sampling operations.

The data outputs (DOs) of SSL 50, PSL 52 and XSL 54 are, as shown, connected in parallel to the data inputs of Silo Output Register (SOR) 72 and the data outputs of SOR 72 are connected in turn to CPUBUS 22. As will be described further, CSS 14 may address and read the contents of any of SSL 50, PSL 52 or XSL 54 to CPUBUS 22 through SOR 72.

In the present embodiment of Bus Monitor 12, SSL 50, PSL 52 and XSL 54 are comprised of video RAMs (Random Access Memories), such as are used in personal computers to store and provide the video display outputs. As is known, video RAMs are comprised of two memory components, the first being a large, relatively slow dynamic memory used to store large volumes of information, such as graphics to be displayed on a display screen, and a smaller and much faster static memory. In normal use, data is written into the dynamic memory portion of a video RAM at a relatively low speed, is subsequently and selectively transferred into static memory portion of the RAM, and read from the static memory portion at a much higher speed, for example, to a graphics display unit. In Bus Monitor 12, however, data is read at high speed into the dynamic memory portion of the video RAM, thereby allowing high speed capture of information present on the monitored points of System 10, such as SYSBUS 18 and transferred into the much larger though slower memory comprised of the dynamic memory portion of the video RAM, from which it may be subsequently read at much lower speeds. The use of video RAMs for Silo Bank 40 thereby provides a memory unit having high speed write and data capture capabilities, in the static memory portion of the video RAM, combined with the high storage volume and low costs of the dynamic memory portion of the video RAM.

### B.2 BMIs 46

Located in the lower left corner of Fig. 2 are BMIs 46 which, as shown, are comprise a SYSBUS BMI (SBMI) 74, a PBUS BMI (PBMI) 76, and an External BMI (XBMI) 78 which provide interfaces between CPUBUS 22 and, respectively, SSL 50, PSL 52 and XSL 54. SBMI 74, PBMI 76 and XBMI 78 are essentially identical and each includes an Address and Register Counter (ADRRC) 80 which has data inputs connected from CPUBUS 22 and a clock input connected from the read/write control and timing circuitry for Silo Bank 40. As will be described further, the ADRRC 80's generate and provide read and write addresses to Silo Bank 40 and may be loaded with addresses from CSS 14, for example, to select information to be read from Silo Bank 40 and to initialize the starting addresses at which sampled information is written into Silo Bank 40. The ADRRC 80 clock inputs from the read/ write timing and control circuitry are primarily used to generate successive addresses for writing sampled information into Silo Bank 40 and reading the recorded information from Silo Bank 40.

Each of SBMI 74, PBMI 76 and XBMI 78 also includes a Decode Register (DCDR) 82 connected from the outputs of the ADRRC 80 and which decodes the contents of the ADRRC 80s to generate, in the present implementation of Bus Monitor 12, the address and column select inputs to the memory elements of SSL 50, PSL 52 and XSL 54. Finally, each of SBMI 74, PBMI 76 and XBMI 78 also includes a Register Store (RS) 84 having data inputs connected from the outputs of the respective ADRRC 80s and data outputs connected to CPUBUS 22, so that the contents of the ADRRC 80s may be read to CSS 14 through CPUBUS 22.

### B.3 Control and Timing, Register and Memory Elements

Adjacent to the BMIs 46 are two generalized control and timing elements, Register/Silo Control/Decode (RSCD) 86 and Control and Timing (CNTLTMG) 88, which was referred to just above in the description of the BMIs 46. These elements are primarily used to control the reading and writing of the registers of the BMIs 46, just described, the memory elements of SSL 50, PSL 52 and XSL 54, SOR 72 and other registers and memory elements of Bus Monitor 12 which will be described in detail further below. RSCD 86 is connected from CPUBUS 22 to receive and decode addresses and operations commands from CSS 14, such as the addresses and commands to write an address into a BMI 46 or to read information from an address in one or more of the elements of Silo Bank 40, and to provide the corresponding control outputs to the elements of Bus Monitor 12, including CNTLTMG 88. CNTLTMG 88, as its name implies, provides the detailed control and timing signals to the register and memory elements of Bus Monitor 12, in particular the memory elements of SSL 50, PSL 52 and XSL 54. As indicated, CNTLTMG 88 has an input from a Trigger output of the trigger detection logic, described in detail in the following, for the purpose of controlling the writing of data from the selected sample points into SSL 50, PSL 52 and XSL 54, and a time stamp, when, as previously described, Bus Monitor 12 detects a selected trigger condition. The design and operation of RSCD 86 and CNTLTMG 88 are conventional and determined at the detailed level by the operations of Bus Monitor 12, which will be described in detail in the following, and the particular circuits chosen for the individual register and memory elements of Bus Monitor 12. As such, and because the design of such as RSCD 86 and CNTLTMG 88 are well known to those of ordinary skill in the art, RSCD 86 and CNTLTMG 88 will not be described in further detail.

### B.4 Trigger Control 38

The primary elements comprising Trigger Control 38 are shown in the lower right portion of Fig. 2 and include Trigger Enable Register (TRIGENR) 90, Trigger Memory (TRIGMEM) 92, Illegal/Error Condition Detector (ELGL/ER) 94, Trigger Detector Logic (TRIGDET) 96, Trigger Registers (TRIGREG) 98 and Time Stamp Generator (TSG) 100. As will be described below, the outputs from TRIGMEM 92, ELGL/ER 94 and the inputs from EXTTRG 42 are trigger signals representing the occurrence of conditions being monitored while TRIGENR 90 stores information, in the form of trigger enabling codes, determining what particular monitored conditions will result in a sampling trigger while. TRIGDET 96 and TRIGREG 98 compare the triggers representing the occurrence of conditions being monitored with the present and previous trigger condition inputs from TRIGENR 90 and generate a trigger output, TRIGS, when a set of monitored conditions match the criteria stored in TRIGENR 90.

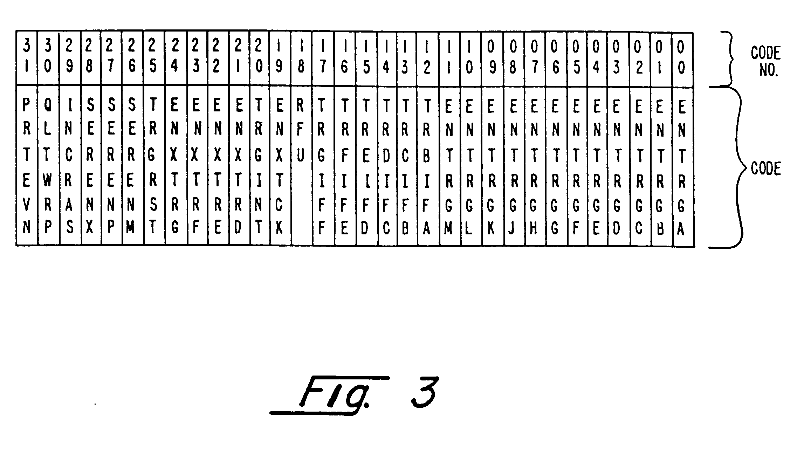

### B.4.1 TRIGNER 90 (Fig. 3)

As shown, TRIGENR 90 has data inputs connected from CPUBUS 22 and receives and stores a set of programmably selectable trigger enable control codes, each of which represents a particular monitored condition or combination of monitored conditions which will result in a trigger output from TRIGDET 96 and TRIGREG 98, or a time sequential combination of triggers which will result in such a trigger output. As will be described, such a trigger output of TRIGDET 96 and TRIGREG 98 results in the sampling, and storage in the appropriate portion of Silo Bank 40, of the conditions then present on the selected sampling points in System 10. The trigger output may also cause an interrupt to be provided to CPU 28, and will determine which of the silo units comprising Silo Bank 40, SSL 50, PSL 52, or XSL 54, is to receive and store information.

The trigger enable control codes implemented in the present embodiment of TRIGENR 90 include 16 enabling codes that relate directly to 16 corresponding trigger inputs provided to TRIGDET 96 from the monitored points in System 10, and other codes which define, as trigger conditions, certain combinations or sequences of those 16 trigger conditions. As will be described, TRIGENR 90 may also store other enabling codes to cause TRIGDET 96 and TRIGREG 98 to generate other control signals to Bus Monitor 12, such as an output to transfer a command stored in ITPR 48, such as a CSS 14 interrupt command, onto SYSBUS 18.

Referring to Fig. 3, therein is shown a diagrammatic representation of TRIGENR 90 as presently implemented. As shown, TRIGENR 90 may contain up to 32 enabling codes, most of which are concerned with enabling certain triggers and sequence or combinations of triggers.

Starting at the right of TRIGENR 90, the first block of codes are a set of 12 trigger enable codes (ENable TRigger ?), ENTRGA through ENTRGM, for enabling Bus Monitor 12 to respond to, respectively, each of Triggers A through M. Of these codes, the first 8 Trigger Enable Codes, ENTRGA through ENTRGH, relate to conditions on SYSBUS 10. Each of trigger enable codes ENTRGA through ENTRGH correspond, respectively, to one of 8 Triggers, A through H, inclusive, generated, as will be described, by TRIGMEM 92. Each of Triggers A through H in turn corresponds to a programmably selectable combination of states on the 80 lines comprising the command, address and data bits of 80 bit SYSBUS 18. ENTRGA through ENTRGH are each one bit codes that determine whether the corresponding trigger will cause recording of the occurrence of a given corresponding trigger condition detected through TRIGMEM 92.

The remaining three enabling codes of this block, ENTRGJ, ENTRGK and ENTRGL, are single bit enabling codes which correspond respectively to Triggers J, K and L, which are generated from ILGL/ER 94 and which are devoted to error conditions and illegal conditions occurring on the buses of System 10 and to such conditions as a timeout condition of SYSBUS 18.

In particular, Trigger J is generated whenever any error is detected on SYSBUS 18 or PBUS 20, the existence of such an error usually being signaled by separate error detection circuitry associated with or in the System 10 elements controlling bus operations.

Trigger K is devoted to error conditions appearing on SYSBUS 18 or in the operations of SYSBUS 18, for example, the appearance of multiple, incompatible responses, such as the concurrent appearance of Acknowledge and Not Acknowledge signals on the SYSBUS 18 command lines. Trigger L is similarly devoted to the operation of SYSBUS 18 and, in particular, to indicating timing problems on SYSBUS 18, such as a timeout condition arising from a bus operation which does not complete within the allowed time.

The enabling code ENTRGM is not associated with a particular condition of System 10 or any of the triggers described just above, but enables Bus Monitor 12 to record every SYSBUS 18 cycle of operation into Silo Bank 40, rather than only recording cycles accompanied by one or more of the trigger conditions described herein.

The next set of 6 one bit per trigger enabling codes, (TRigger ? IF ?) TRBIFA, TRICIFB, TRIGDIFC, TRIGEIFD, TRIGFIFE and TRIGIFF allow a user to define a trigger output dependent upon the sequential occurrence of one or more previous triggers of the group Trigger A through F, that is, to detect the occurrence of two to seven trigger conditions in a sequence. For example, if TRBIFA is set as true, then the condition causing Trigger B can be detected, and Trigger B generated, only if the condition causing Trigger A has already been detected and Trigger A generated.

In the present implementation of Bus Monitor 12, these multi-level, or multiply enabled, triggers always "begin" with Trigger G and progress upwards towards Trigger A. In addition, the enabling codes ENTRGA through ENTRGG of the triggers included in the sequence must be set as true to enable the precedent and final trigger conditions of the desired sequence to be detected. For example, a two condition trigger would require that (TRGIFF)(ENTRGF)(ENTRGG) be all set as true: TRIGIFF is true so that final trigger condition Trigger G will occur only if precedent Trigger F has occurred, ENTRGF is true to enable precedent Trigger F, and ENTRGG is true to enable the final Trigger G. Similarly, a three condition trigger would require that (TRFIFE)(TRGIFF)(ENTRGE)(ENTRGF)(ENTRGE) to make the final Trigger G dependent upon preceding Triggers E and F and to enable the occurrence of Triggers G, F and E. It should be noted that the present requirement of preceding from Trigger G upwards towards Trigger A is not an actual limitation on the possible sequences that may be constructed in that Triggers A through G may be individually assigned to any selected conditions that are to be detected; that is, the sequential alphabetical designation of Triggers A through G is purely a nomenclature convention and implies no limitations on the assignment of the triggers to trigger conditions or the sequence of trigger conditions. It should be further noted that TRIGIFF operates as an enabling code for the sequential operation in general and that, if TRIGIFF is not set true, any of Triggers A through H may be generated when the corresponding conditions occur.

Going out of sequence with the order of the enabling codes listed in TRIGENR 90, each of the four enabling codes (ENable eXternal TRigger ?) ENXTRD, ENXTRE, ENXTRF and ENXTRG are associated with a corresponding one of External Triggers XD, XE, XF, and XG from EXTTRG 42. These four external triggers operate together with their respective four corresponding internal triggers provided from TRIGMEM 92, Triggers D, E, F and G, in a number of different ways.

Firstly, any of Triggers XD, XE, XF or XG may be used in place of, that is, in substitution for, the corresponding one of Triggers D, E, F or G by disabling the Trigger D, E, F or G by programming "don't care" codes in TRIGMEM 92, as described in a following description of TRIGMEM 92, and setting the enabling code of the Trigger XD, XE, XF or XG. The Trigger XD, XE, XF or XG will then operate in place of the Trigger D, E, F or G.

Secondly, any of Triggers XD, XE, XF or XG may be used with the corresponding Trigger D, E, F or G in an AND type operation by appropriately programming the Trigger D, E, F or G in TRIGMEM 92, as described, and setting the enabling codes for both the Trigger XD, XE, XF or XG and the corresponding Trigger D, E, F or G. As was described and will be described further with respect to TRIGMEM 92, Triggers D, E, F and G are each generated as a result of 80 bit conditions appearing on the lines of SYSBUS 18; the use of Triggers XD, XE, XF and XG allows those 80 bit conditions to be extended to 81 bit conditions, wherein the 81^{st} bit represents a non-SYSBUS 18 condition, that is, an external trigger condition.

Thirdly, any of Triggers XD, XE, XF or XG may be used separately from the corresponding ones of Triggers D, E, F or G by setting the enabling codes for the selected ones of Triggers XD, XE, XF or XG and Triggers D, E, F or G and, contrary to the first case described just above, programming the Triggers D,E, F or G in TRIGMEM 92 with active codes rather than with "don't care" codes. This application of the external triggers will generate an OR type function, that is, and for example, a trigger on either Trigger XF OF Trigger F.

Lastly, Triggers XD, XE, XF and XG may be employed in any of the above described manners in the generation of sequential trigger conditions as described with reference to enabling codes TRBIFA, TRICIFB, TRIGDIFC, TRIGEIFD, TRIGFIFE and TRIGIFF. This use of the external triggers would allow a sequential trigger condition to be constructed which would require, for example, the appearance of Trigger XF rather than Trigger F in the sequence, or the reverse, or the occurrence of both Triggers XF and F in the sequence.

The remaining codes of TRIGENR 90 are not directly concerned with the generation of triggers, but are used to control and enable other operations and functions of Bus Monitor 12 and System 10.

For example, ENXTCK (ENable eXternal ClocK) is a code which enables a clock associated with the triggers from EXTTRG 42 to copy conditions from EXTTRG 42, such as cycles on a bus to which the inputs from EXTTRG 42 are connected, into XSL 54.

TRGINT (TRiGger INTernal) is an enabling code which, if set as true, will cause CPU 28 to interrupt the operations of CSS 14 when Bus Monitor 12 detects Trigger G or when TRGIFF is not true and any trigger of Triggers A through L are detected. This interrupt is usually implemented through an interrupt command stored in ITPR 48 and transferred onto SYSBUS 18 upon the enabled trigger condition.

TRGRST (TRigger ReSeT) enables Trigger Control 38 to reset the TRIGREG 98 registers storing Triggers A through F at the end of each SYSBUS 18 cycle so that, so long as TRGRST is set, Triggers A through F may be detected and recorded each SYSBUS 18 cycle.

SERENM (SERial ENable Memory) controls the clock that writes information from SYSBUS 18 into SSL 50. When this enabling code is not set, nothing may be written into SSL 50; this code will typically be set when System 10's buses, in particular SYSBUS 18, are being monitored, and not set when CSS 14 is reading the contents of Silo Bank 40. Enabling codes SERENP and SERENX similarly control the writing of information into, respectively, PSL 52 and XSL 54.

INCRAS (INCRement Address Store) is an enabling code which, when set, allows Bus Monitor 12 to increment the Silo Bank 40 addresses stored in the ADRRC 80s of SBMI 74, PBMI 76 and XBMI 78 when Bus Monitor 12 is recording data into SSL 50, PSL 52 and XSL 54. INCRAS is reset when the recording of data has stopped and the information stored in Silo Bank 40 is being examined or processed.

Finally, enabling codes QLTWRP and PRTEVN are codes used in the testing of System and and Bus Monitor 12. QLTWRP (Quality Test Wraparound Mode) causes Bus Monitor 12 to respond only to trigger conditions resulting from System 10 bus operations initiated by Bus Monitor 12. PRTEVN (Parity Even) is sued to force test conditions on SYSBUS 18 by causing all parity bits on SYSBUS 18 to be set for even parity.

### B.4.2 Trigger Condition Inputs: EXTTRG 42, ILGL/ER 94 (Fig. 2)

As shown, the trigger enable outputs of TRIGENR 90 are connected to a first set of inputs of TRIGDET 96. A second set of TRIGDET 96 inputs are connected from the outputs of TRIGMEM 92 and from ELGL/ER 94 and EXTTRG 42. This second set of inputs to TRIGDET 92 comprise the set of System 10 conditions which are monitored by Trigger Control 38. As described, some of this set of monitored condition inputs, such as those from EXTTRG 42, are connected directly from the trigger condition sources while others, such as the inputs from TRIGMEM 92 and ELGL/ER 94, are generated indirectly from the monitored conditions.

First considering the inputs from EXTTRG 42, these inputs are referred to as "external" in that they are from points outside of SYSBUS 18 and PBUS 20 and are connected directly from those points to TRIGDET 96 without further processing or logic operations being performed on these inputs. As described, these inputs to TRIGDET 96 comprise Triggers XD, XE, XF and XG and may be from, for example, points in Memory 16, CPU 28 or CSS 14 in general, various other system elements connected from SYSBUS 18, or even from points or devices external to System 10, such as peripheral devices or other systems, or any other points selected by the user of Bus Monitor 12.

The inputs of ILGL/ER 94 are connected from both SYSBUS 18 and PBUS 20 and from other devices and elements of System 10 which would be monitored in the normal course of such monitoring operations. These inputs are devoted, in particular, to error conditions occurring at these points in the system, and to detecting defined error conditions on SYSBUS 18 and PBUS 20. In the present implementation, ILGL/ER 94 is comprised of combinatorial logic embodied, for example, as a programmable logic array, which accepts these inputs and generates a set of triggers representing error conditions.

Two outputs of ILGL/ER 94, Triggers J and K, are generated from inputs connected from, respectively, the command and control lines of SYSBUS 18 and PBUS 20 and represents specific error conditions on SYSBUS 18 or PBUS 20, providing Trigger J or K when such a condition occurs. Examples of such bus error conditions may include command signals indicating the occurrence of multiple, incompatible responses on a bus, such as simultaneous acknowledge and not acknowledge signals, simultaneous not acknowledge and wait signals, simultaneous acknowledge and wait signals; the occurrence of improper timing conditions on a bus, such as a short response or disconnect condition.

Finally, ILGL/ER 94 generates Trigger L to indicate timing errors in System 10, specifically in system bus operations. The inputs generating Trigger L are connected from the various devices of System 10 which control system bus operations, for example, any of the devices having bus control capabilities for SYSBUS 18 or PBUS 20. Trigger L is generated as an output whenever a such device detects a timeout condition, that is, that a current bus operation has not completed within the normally allowed time.

### B.4.3 Trigger Condition Inputs: TRIGMEM 92 (Figs. 2, 4, and 5)

Referring to TRIGMEM 92, as was described, the trigger enable codes provided from TRIGENR 90 include 8 codes, ENTRGA through ENTRGH, relating to conditions on SYSBUS 10. Each of these trigger enable codes corresponds respectively to one of 8 Triggers, A through H, inclusive, each of which in turn corresponds to a programmably selectable combination of states on the 80 lines comprising the command, address and data bits of 80 bit SYSBUS 18. These 8 Triggers A through H are provided from TRIGMEM 92 and are individually and programmably selectable.

As shown in Fig. 2, TRIGMEM 92 is a dual port memory. The first port of TRIGMEM 92 is comprised of a first address input, Condition Address Input (CA), and a memory data input, Condition Data Input (CDI), which are both connected from CPUBUS 22. The second port of TRIGMEM 92 is comprised of a second address input, Trigger Address (TA), which is connected from the lines of SYSBUS 18, and the TRIGMEM 92 data output, Trigger Data Output (TDO), which is connected to trigger inputs of TRIGDET 96.

TRIGMEM 92 is functionally eight bits wide, with each bit corresponding to one of Triggers A through H, and stores patterns of Trigger bits A through H corresponding to the SYSBUS 18 conditions to be detected. Each such pattern of Trigger bits A through H occupies a TRIGMEM 18 location whose address corresponds to the particular combination of SYSBUS 18 bits representing the corresponding SYSBUS 18 condition to be detected. The presence on SYSBUS 18 of a condition which has been selected to be monitored will, because the signals present on the lines of SYSBUS 18 are connected to the second port address input TA of TRIGMEM 92, result in the addressing and reading from TRIGMEM 92 of the pattern of Triggers A through H which have been selected to correspond to that particular SYSBUS 18 condition.

The Trigger bit patterns are generated or provided from CSS 14 and are written into the appropriate TRIGMEM 92 address locations by CSS 14 acting through the first port of TRIGMEM 92, that is, through TRIGMEM 92's CA and CDI. These trigger patterns may, for example, be generated under control of software executing in CSS 14, or may be loaded from an outside source under control of CSS 14, or may be stored in CSS 14's EPROM 34 and selected from EPROM 34 and written into TRIGMEM 92 under control of CSS 14.

Thereafter, and while Bus Monitor 12 is monitoring the activities on SYSBUS 18, the bits present on the command, address and data lines of SYSBUS 18 are provided as read addresses to the address input of TRIGMEM 92's second port, that is, to TA. When the combination of bits present on the lines of SYSBUS 18 corresponds to a SYSBUS 18 condition to be detected, the pattern of Trigger bits A through H selected for that particular SYSBUS 18 condition, and stored in the TRIGMEM 92 address location corresponding to that combination of address input bits from SYSBUS 18, will be read from TRIGMEM 92 and to TRIGDET 96, thereby generating the selected ones of Triggers A through H.

As was previously described, SYSBUS 18 of the System 10 incorporating the present invention contains up to 80 lines. These 80 lines comprise 32 address bits, 7 miscellaneous bits used for various functions, 32 data bits, and 8 command bits.

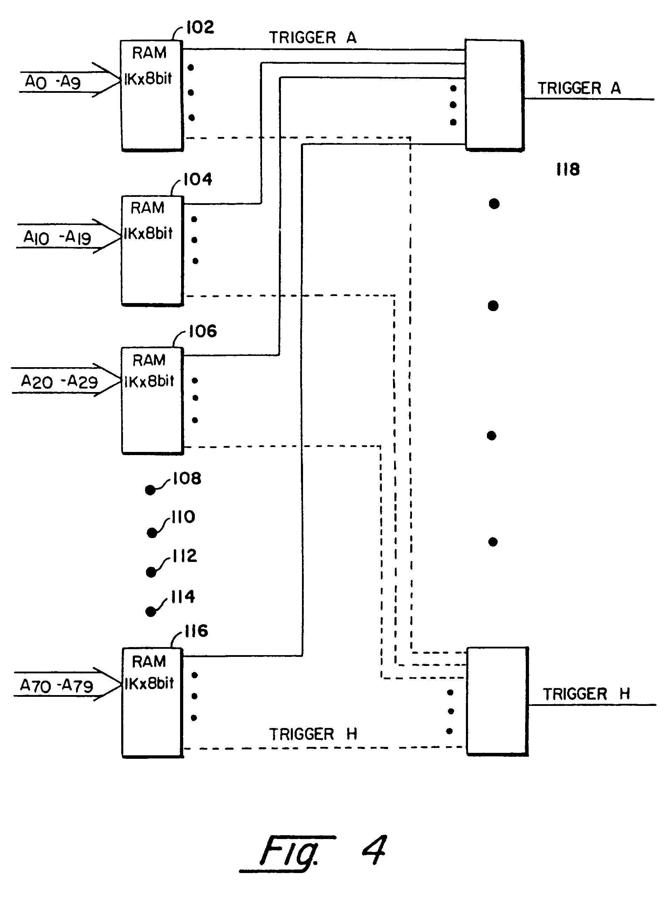

TRIGMEM 92 of the present implementation is comprised of 8 8x1024 dual port Sub-Memories 102 through 116 and an 8 part AND Function 118 connected as shown in Fig. 4. As illustrated, the 80 address input lines from SYSBUS 18 are divided into 8 10-bit fields and the Trigger patterns are correspondingly divided into 8 8-bit sub-trigger fields wherein each sub-trigger field occupies one of Sub-Memories 102 through 116 and contains positions corresponding to each of Triggers A through H. TRIGMEM 92 detects the equivalence of a combination of bits on SYSBUS 18 with a trigger pattern stored in the 8 Sub-Memories 102-116 by associating each 10-bit address sub-field from SYSBUS 18 with a location in each of the 1024x8 submemories of TRIGMEM 92. The content of each such trigger sub-field location in Sub-Memories 102-116 will contain logic ones in the appropriate Trigger positions if the SYSBUS 18 address sub-field corresponds to a SYSBUS 18 condition to be detected, or if the particular trigger subfield is determined to be a "don't care" condition. If all eight trigger sub-fields contain a logic 1 in the location addressed in the TRIGMEM 92 Sub-Memories 102-116, these 1s will be detected by the AND Function 118 and the appropriate ones of Triggers A through H provided to TRIGDET 96.

To illustrate, assume that TRIGMEM 92 is to provide Trigger A as an output when the condition
(a)00010000 (b)00000000 (c)10000000 (d)00000000
(e)11000000
(f)00000000 (g)11111111 (h)00110000 (i)00000000
(j)11100011
occurs on SYSBUS 118 occurs. Ignoring the possibility of "don't care" states, the trigger pattern for this condition will then comprise:
(a) a 1 in Trigger A position at Sub-Memory address 00010000;
(b) a 1 in Trigger A position at Sub-Memory address 00000000;
(c) a 1 in Trigger A position at Sub-Memory address 10000000;
(d) a 1 in Trigger A position at Sub-Memory address 00000000;
(e) a 1 in Trigger A position at Sub-Memory address 11000000;
(f) a 1 in Trigger A position at Sub-Memory address 00000000;
(g) a 1 in Trigger A position at Sub-Memory address 11111111;
(h) a 1 in Trigger A position at Sub-Memory address 00110000;
(i) a 1 in Trigger A position at Sub-Memory address 00000000; and,
(j) a 1 in Trigger A position at Sub-Memory address 11100011.

When the bits, or condition, expressed above appears on the 80 lines of SYSBUS 118, a logic 1 will appear at the Trigger A position outputs of all of Sub-Memories 102-116 and AND Function 118 will accordingly provide a Trigger A output from TRIGMEM 92.

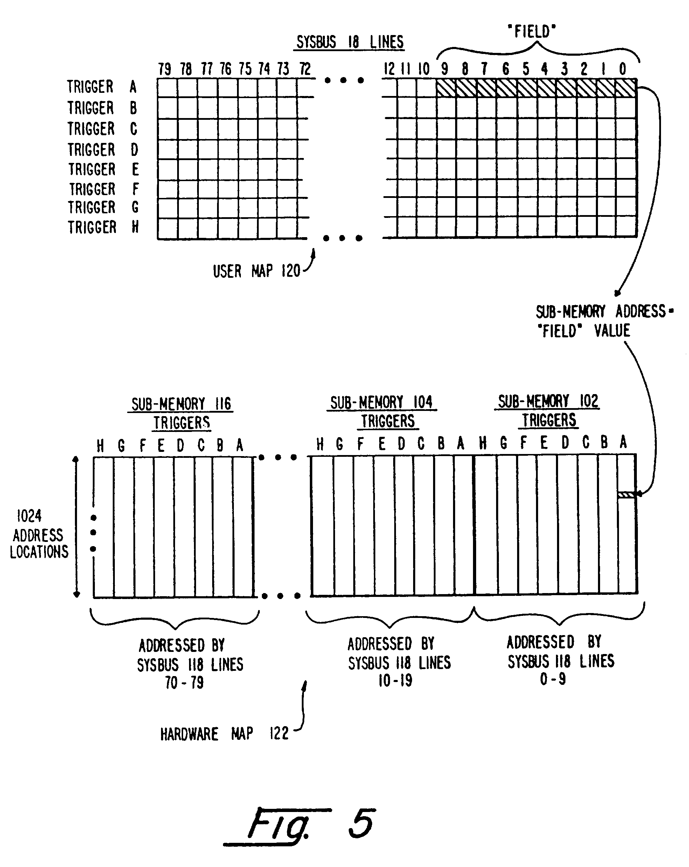

The process by which a trigger pattern for one or more of Triggers A through H is generated and loaded into TRIGMEM 92 is illustrated in Fig. 5. As indicated, this process is comprised of two stages.

The first stage is the generation of a User Map 120 in which the conditions, or signals, present on each of SYSBUS 118's 80 lines are specified for each of Triggers A through H which are to be generated. This portion of the process is illustrated by the upper portion of Fig. 4, which represents a User Map 120. As shown, a User Map 120 contains 8 rows, one for each of Triggers A through H, and 80 columns, one for each of the lines of SYSBUS 18.

For each of Triggers A through H which are to be generated, the user first selects which trigger of Triggers A through H is being specified and then specifies the trigger condition for that trigger by defining a Boolean product function (an AND function) containing 1 to 80 terms wherein each term represents one of the 80 SYSBUS 18 signals that is to actively participate in generating the trigger. The user then assigns a state, logic 1 or logic 0, to each of the SYSBUS 18 signals, or lines, that is to define the trigger condition, depending upon whether the monitored condition requires that the signal on the corresponding line is to be a logic 1 or a logic 0. Signals not used in defining the trigger are assigned a "don't care" status. The addition of a "don't care" state to the trigger condition definitions, as well as logic 1 and logic 0 states, requires that the condition of each line, or signal, taking part in the definition of the trigger be defined by at least two bits.

These first steps are illustrated in the upper portion of Fig. 4, wherein a the definition of the SYSBUS 18 lines for portion of User Map 120 for a Trigger A has been represented by hatching.

In the second stage of the process, the User Map 120 is transformed into a Hardware Map 122, which represents the actual trigger patterns to be stored in TRIGMEM 92. As shown in the lower portion of Fig. 4, Hardware Map 122 is structured into 8 blocks, corresponding respectively to the 8 Sub-Memories 102-116 comprising TRIGMEM 92 and the corresponding 8 groups of ten SYSBUS 18 lines, each of which are connected to the second port address inputs of Sub-Memories 102-116, that is, to TA of TRIGMEM 92. Each block of Hardware Map 122 is comprised of 8 columns, each column corresponding, as indicated, to one of Triggers A through H, and into 1024 rows wherein each row corresponds to one of the Sub-Memory 102-116 address locations separately addressable by the 10 bit address inputs from the blocks of SYSBUS 18 lines.

The trigger patterns stored in Sub-Memories 102-116, that is, in the blocks of Hardware Map 122, are then generated by dividing each row of User Map 120 into eight 10 bit "fields", wherein each such "field" represents, for a given trigger, the Boolean combination of signals on a 10 line block of SYSBUS 18 that defines a part of the trigger condition for that trigger.

One such "field" is represented by hatching in User Map 120. Each such 10 bit "field" may assume 1024 different values, defining a corresponding 1024 different binary numbers, and each of these values is assigned, on a 1-to-1 basis, to a corresponding single bit location in the column of Hardware Map 122, the address of the single bit location corresponding to the "value" of the field. The location of any given "bit" in a column of Hardware Map 122 is thereby set to "1" if the binary address of its location in the column corresponds to value of a "field" from User Map 120. This mapping of triggers and trigger conditions from User Map 120 to trigger patterns in Hardware Map 122 is illustrated in Fig. 4 for a single 10 bit "field" from the specification of a trigger in User Map 120, showing how that field maps into a single address location in a single column one sub-memory block of Hardware Map 122.

The result of this process is that, for each trigger condition, that is, for each of Triggers A through H which have been defined by the user, there will be created a corresponding trigger pattern of one and zeros in the 8 columns of the 8 blocks of Hardware Map 122, one for each 10 bit "field" of User Map 120.

The resultant trigger pattern may then be written directly into TRIGMEM 92 or, more likely, will be stored in Memory 16 or RAM 30 of CSS 14 and written into TRIGMEM 92 before the monitoring operation begins. Also, as as described elsewhere herein, certain preselected and often used trigger patterns may be "permanently" stored in EPROM 34 of CSS 14 for use when selected by a user of Bus Monitor 12.

### B.4.4 TRIGDET 96 and TRIGREG 98

In its most basic aspect, TRIGDET 96 is an AND/OR function which compares the triggers provided from EXTTRG 42, ILGL/ER 94 and TRIGMEM 92 with the trigger enable codes provided by TRIGENR 90 and provides a trigger output, TRIGS, whenever there is a concurrence of a SYSTEM 10 condition, as evidenced by a corresponding Trigger, and a trigger enable code. In this aspect, TRIGREG 98 is provided to latch and store the Triggers causing the TRIGS output so that, as previously described, the Trigger or Triggers causing TRIGS may be stored in Silo Bank 40, together with the sample data from the various sampling points in System 10.

In addition, however, and as described, certain Triggers may result from the time sequential occurrence of others of Triggers A through H and XD through XH. For this reason, TRIGREG 98 stores not only the Trigger or Triggers directly causing TRIGS, but the sequential occurrence of Triggers and provides this information back to TRIGDET 96. TRIGDET 96 will, in turn, generate a TRIGS upon the occurrence of a specified sequence of Triggers when such has been specified and enabled by the trigger enable codes.

In as much as the detailed design of and implementations of the logic necessary to perform the functions of TRIGDET 96 and TRIGREG 98, and the necessary operations performed by TRIGDET 96 and TRIGREG 98 are fully described and defined by the other portions of this description of Bus Monitor 12, such as the descriptions of TRIGENR 90 and the enabling codes stored therein and TRIGMEM 92 and the trigger patterns stored therein, TRIGDET 96 and TRIGREG 98 will not be described further herein.

### B.4.6 Interrupt/Pattern Programmable Registers 48

As described above, the TRIGS output generated by TRIGDET 96 and TRIGREG 98 initiates the recording of data from SYSBUS 18, PBUS 20 and the sources of EXTTRG 42 into Silo Bank 40. In addition, and as previously described, Bus Monitor 12 includes a set of Interrupt/ Pattern Programmable Registers (IPPR) 48 connected from CPUBUS 22 and to SYSBUS 18. As was described, IPPR 48 may be used by CSS 14 in a first mode to test SYSBUS 18 and system elements connected from SYSBUS 18 by allowing CSS 14 to write test patterns onto SYSBUS 18 through IPPR 48 under the control of CSS 14.

In the bus monitoring mode, CSS 14 may write selected commands into IPPR 40, such as a system or CPU interrupt command. These commands will reside in IPPR 40 until the occurrence of a TRIGS output from TRIGDET 96 and TRIGREG 98 and will be transferred onto SYSBUS 18 at that time. In the present implementation of Bus Monitor 12, this command is most usually a CPU 28 interrupt command that will suspend the operation then being executed by CPU 28, so that Monitor 12 may interrupt the operation of System 10.

This interrupt command appears on SYSBUS 18, and at the end of the SYSBUS 18 cycle, which is terminated by the command. The block of information stored in SSL 50 in association with the events related to the monitored condition causing the trigger will, in this case, begin with the trigger itself and the then present conditions on SYSBUS 18 that were sampled as a result of that trigger condition, such as the states present on the lines of SYSBUS 18 during that SYSBUS 18 cycle, and will conclude with the interrupt command as the final entry, the interrupt command having been the final set of conditions, or state, appearing on SYSBUS 18. In order to assist in correlating the data entries recorded in the three silo banks, SSL 50, PSL 52 and XSL 54, the interrupt command is also copied into the time stamp silo of PSL 52 and XSL 54, that is, into PTSL 66 and XTSL 70, if these silos are recording the event in which the interrupt command occurs.

### B.4.7 Time Stamp

As was previously mentioned, Trigger Control 38 includes a Time Stamp Generator (TSG) 100 which is essentially a counter which is initiated upon and by the occurrence of a TRIGS from TRIGDET 96 and TRIGREG 98. The count output of TSG 100 is written into SSL 50 at the start of each sampling operation after the occurrence of a trigger, at the same address location as the data from SYSBUS 18 being recorded in SSL 50, and is provided so that a user of Bus Monitor 12 may determine the relative times of occurrence of each trigger condition. The count from TSG 100 is also written into PSL 52 and XSL 54, depending upon which of the portions of Silo Bank 40 are recording data in a given sampling operation of Bus Monitor 12, to aid in correlating the data stored in SSL 50, PSL 52 and XSL 54. The time stamp counts are again written into PSL 52 and XSL 54 at the same addresses as the data being concurrently recorded thereion.

In the present implementation of Bus Monitor 12, Time Stamp Generator is a 32 bit synchronous, wrap around counter clocked at 16 MHz and the low order 17 bits of Time Stamp Generator 100's count are written into STSL 62 while the low order 22 bits are written into PTSL 66 and XTSL 70.

The recording of the time stamp count in SSL 50 and portions of the time stamp count in PSL 52 and XSL 54 is desirable because the writing of sampled data into the three subbanks of Silo Bank 40 are not correlated in themselves. That is, and for example, the various monitoring and sampling operations do not all result in data being written into all three portions of Silo Bank 40 in each operation, so that the blocks of information occupying similar address locations in the three subbanks of Silo Bank 40 are not necessarily from the same sampling operation. For example, if SYSBUS 18 is monitored for a condition which is of interest only with respect to SYSBUS 18, the occurrence of that condition would result in data being written only into SSL 50. There is, however, a relationship between certain of System 10's operations that will, for these operations, be reflected in the data recorded in Silo Bank 40. For example, each group of 8 cycle entries in PSL 52, that is, each recording of a PBUS 20 operation, was caused by an operation on SYSBUS 18, that is, a Memory 16 read command, so that in order to record all events of interest with regard to a PBUS 20 operation, it is necessary to either enable Trigger M, to record all SYSBUS 18 cycles, or assign one of Triggers A through H to detect a Memory 16 read command.

Even for operations which are related, however, the blocks of data stored in the three subbanks of Silo Bank 40 in the sampling operations are not of equal size. For example, a typical SYSBUS 18 operation which results in a trigger condition and the recording of SYSBUS 18 data in SSL 50, such as a SYSBUS 18 command for a data read from Memory 16, occupies only a single SYSBUS 18 cycle. In most instances, therefore, Bus Monitor 12 accordingly records only a single SYSBUS 18 cycle of data when a trigger arises from a SYSBUS 18 condition. The operations of PBUS 20 and certain operations reflected by the inputs from EXTTRG 42, however, may occupy more than one SYSBUS 18 cycle. For example, a command for a data read from Memory 16 may occupy only a single SYSBUS 18 cycle, but the actual read of the data from Memory 16 through PBUS 20 will occupy 8 consecutive PBUS 20 cycles. Therefore, if that particular operation results in a trigger condition and the recording of data into Silo Bank 40, Silo Bank 40 must record the data from one SYSBUS 18 cycle in SSL 50 and the data from 8 consecutive PBUS 20 cycles in PSL 52 and CNTLTMG 88 must correspondingly generate 8 read cycles to PSL 52 for each single read cycle to SSL 50. The relationship between the data recorded in XSL 54 and that recorded in SSL 50 and PSL 52 will depend upon source of the data entered into XSL 54, but will be similar in nature to that between SSL 50 and PSL 52; accordingly, the following will describe the method for correlating the data stored in SSL 50, PSL 52 and XSL 54 using SSL 50 and PSL 52 as the example.

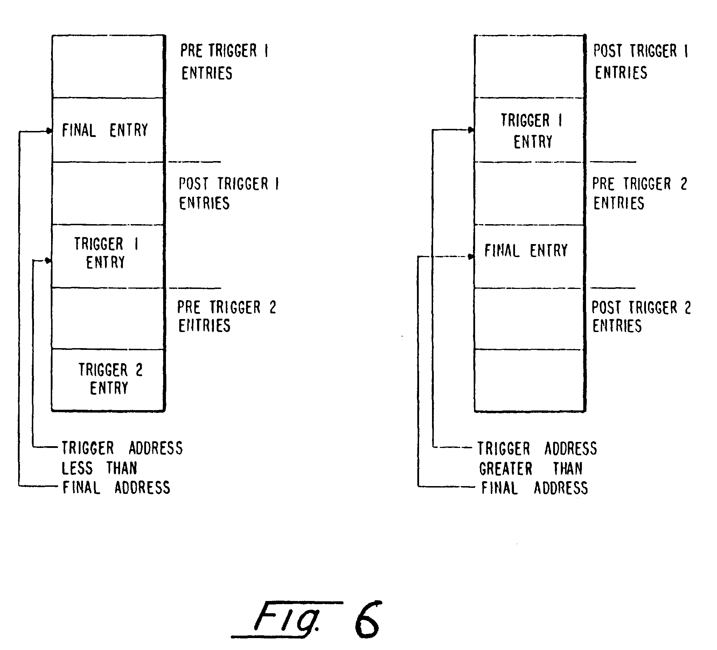

Because of the above discussed factors, the data recorded in SSL 50 or PSL 52 may assume either of the configurations illustrated in Fig. 6, which shows possible configurations of the data residing in the silo banks after two trigger events. It is assumed in Fig. 6 that the older data is toward the top of the Figure while newer data is entered at the bottom.

In order to align related entries in the two silos, System 10, that is, CSS 14, must locate and save two addresses for each of the silos, the first being the address of the silo entry containing the "final trigger', that is, the point of the interrupt command. The second address to locate in each silo is the address of the "final valid entry", that is, the values in the SYSBUS 18 and PBUS 20 silo address registers, that is, the ADRRC 80's of their respective SBMI 74 and PBMI 76, at the point recording stopped.

Assuming that Bus Monitor 12 is operating with the three silos independently capturing and recording data, the data being recorded in the silos will be uncorrelated with respect to the respective silo addresses. At some point, a trigger will occur and will be recorded in the three silos, as described. The trigger will be recorded continuously in each successive address location of the silos until either the trigger is reset, to prepare the monitor for a next monitoring operation, or the silos are frozen for examination.

The user will then search the silos, for example, SSL 50, to locate the recorded trigger of interest and will trace that trigger recording back through the silo to the first appearance of the trigger in the silo data, that is, the start of the recording due to that trigger.

At this point, the user may attempt to locate and trace the recorded trigger indication each of the other silos, or may trace back through the recorded time stamps in the other silos to a time stamp which is closest to that found with the start of the trigger as originally searched.

Searching the time stamps recorded in the silos for the closest matching pair of time stamps thereby allows the user to locate recorded events that are related in time. The silos are then searched around these points to locate the trigger entries closest to these time stamps, that is, the matching trigger points.

At this point the choice must be made as to which view of the recorded data is to be examined, the events preceding the triggers or the events following the triggers. If the pre-trigger events are to be examined, the recorded data is scanned in the direction of decreasing addresses and, if the post-trigger data is to be examined, in the direction of increasing addresses. The scanning and examination of recorded data continues until the "final entry" is found in each silo.

In addition to assisting in the location of events which are related in time, the provision of time stamps with the recorded data allows the relative times of events to be determined from silo to silo, that is, allows the sequence of events are recorded in the silos to be placed in time relationship with one another so that, for example, the user may determine the relationship between an event recorded from PBUS 20 and the related events on SYSBUS 18.

## Claims

1. A monitor apparatus for selectively detecting signal conditions at points in an operating system, characterized by
- a condition sensing circuit (92) coupled to a first set of points in said system for sensing predetermined signal conditions at said first set of points and for generating first-type output signals (A - H) upon the occurrence of said predetermined conditions;
- an enabling circuit (90) for storing a plurality of codes corresponding to different ones of said first-type output signals and for delivering second-type output signals representing said codes; and
- a detecting circuit (96, 98) coupled to said condition sensing circuit and to said enabling circuit and responsive to said first-type and second-type signals for generating third-type output signals upon the occurrence of first-type output signals corresponding to said second-type output signals.

2. The monitor apparatus of claim 1 further providing for recording signal conditions at certain points in said operating system, characterized by
- storage means (40) coupled to a second set of points in said system and to said detecting circuit and responsive to said third-type signals for recording representations of the signal conditions present at said second set of points.

3. The monitor apparatus of claim 1 further characterized by
- said condition sensing circuit (92) comprising an addressable store for holding in the addressable cells thereof different patterns of first-type output signals, and
- means for applying said signal conditions at said first set of points as an address to said addressable store.

4. The monitor apparatus of claim 2 further characterized by
- a timing generator (100) for generating timing signals representing the relative times of occurrence of events in said monitor appatatus, and
- said storage means (40) being further coupled to said timing generator for recording said timing signals in association with the recording of said signals condition representations.

5. The monitor apparatus of claim 2 for use in a computer system for selectively detecting and recording conditions at selected points within the system during operation, comprising
- means for storing a plurality of selectable trigger enabling codes, each enabling code corresponding to a trigger signal representing the occurrence of a corresponding condition to be detected;
- means connected from a first plurality of selected points within the system and responsive to selected conditions occurring at the first points for generating trigger signals representing the occurrence of corresponding selected conditions;
- means responsive to the trigger enabling codes and to the trigger signals for providing trigger outputs upon the occurrence of a trigger signal corresponding to a selected trigger enabling code; and
- silo bank means connected from a second plurality of selected points within the system and responsive to the trigger outputs for recording the conditions present at the second points.

6. The monitor apparatus of claim 5, wherein the first plurality of selected points comprise the lines of a first bus of the system.

7. The monitor apparatus of claim 5, wherein the second plurality of selected points comprises the lines of a first bus of the system.

8. The monitor apparatus of claim 5, wherein the second plurality of selected points comprises the lines of a second bus of the system.

9. The monitor apparatus of claim 5, wherein the first set of selected points includes a first system bus, and the means for generating trigger signals comprises a trigger memory means for storing patterns of trigger signals, each pattern of trigger signals corresponding to a selected condition to be detected on the first system bus, wherein the trigger memory means includes
- a first port having a read address input connected from the lines of the first system bus, and
- a data output port connected to the trigger output means for providing patterns of trigger signals corresponding to the bus conditions to be detected,
wherein each pattern of trigger signals is stored in the trigger memory means location whose address corresponds to the pattern of signals on the first system bus representing the corresponding condition to be detected.

10. The monitor apparatus of claim 9, wherein the trigger memory means is a dual port memory means, and the system further comprises a processor means for generating write addresses for the trigger memory means and for providing trigger patterns to be written into the trigger memory means, and wherein the trigger memory means further comprises
- a second port having a data input and a write address input connected from the processor means for receiving and stroring the trigger patterns provided from the processor means.

11. The monitor apparatus of claim 5, wherein the means for storing trigger enabling codes comprises means for storing a plurality of bus enabling codes, wherein each of the bus enabling codes corresponds to one of a plurality of bus trigger signals, and each of the bus trigger signals represents a selected condition on a bus of the system.

12. The monitor apparatus of claim 5, wherein trigger enabling codes comprise a plurality of trigger sequence enabling codes, wherein
- each of the trigger sequence enabling codes corresponds to a sequential combination of trigger signals, and wherein
- each trigger signal specified by a trigger sequence enabling code must occur in the sequence defined by the trigger enabling code.

13. The monitor apparatus of claim 5 wherein the silo bank means comprises a plurality of sub-silo means each thereof corresponding to and recording the conditions present at a corresponding one of the second selected points, and wherein each of the sub-silo means comprises
- a static memory means having data inputs connected from a corresponding one of the second selected points, and
- a dynamic memory means having data inputs connected from data outputs of the static memory means,
wherein the sub-silo means is responsive to the corresponding trigger outputs for
- capturing the conditions present at the selected second points into the static memory means, and
- transferring the captured conditions into the dynamic memory means for recording of the captured conditions.

## Patentansprüche

1. Monitorvorrichtung zum selektiven Erfassen von Signalbedingungen an Punkten in einem Betriebssystem,
gekennzeichnet durch:
- eine Bedingungserfassungsschaltung (92), welche mit einem ersten Satz von Punkten in dem System gekoppelt ist, zum Erfassen vorbestimmter Signalbedingungen am ersten Satz von Punkten und zum Erzeugen von Ausgabesignalen (A-H) eines ersten Typs nach dem Auftreten der vorbestimmten Bedingungen;
- eine Freigabeschaltung (90) zum Speichern einer Vielzahl von Codes entsprechend unterschiedlicher Ausgabesignale des ersten Typs und zum Liefern von Ausgabesignalen eines zweiten Typs, welche die Codes darstellen; und
- eine Erfassungsschaltung (96, 98), die mit der Bedingungserfassungsschaltung und der Freigabeschaltung gekoppelt ist und auf die Signale des ersten Typs und des zweiten Typs anspricht, zum Erzeugen von Ausgabesignalen eines dritten Typs nach dem Auftreten von Ausgabesignalen des ersten Typs entsprechend den Ausgabesignalen des zweiten Typs.

2. Monitorvorrichtung nach Anspruch 1, welche weiterhin für Aufzeichnungssignalbedingungen an bestimmten Punkten im Betriebssystem vorgesehen ist, gekennzeichnet durch
- eine Speichereinrichtung (40), die mit einem zweiten Satz von Punkten im System und mit der Erfassungsschaltung gekoppelt ist und auf die Signale des dritten Typs anspricht, zum Aufzeichnen von Darstellungen der Signalbedingungen, die am zweiten Satz von Punkten vorliegen.

3. Monitorvorrichtung nach Anspruch 1, weiterhin gekennzeichnet durch:
- die Bedingungserfassungsschaltung (92) weist einen adressierbaren Speicher zum Halten unterschiedlicher Muster der Ausgabesignale des ersten Typs in dessen adressierbaren Zellen auf; und
- eine Einrichtung zum Anlegen der Signalbedingungen an den ersten Satz von Punkten als eine Adresse an den adressierbaren Speicher.

4. Monitorvorrichtung nach Anspruch 2, weiterhin gekennzeichnet durch:
- einen Zeitgabegenerator (100) zum Erzeugen von Zeitgabesignalen, welche die relativen Zeitpunkte des Auftretens von Ereignissen in der Monitorvorrichtung darstellen, und
- die Speichereinrichtung (40) ist weiterhin mit dem Zeitgabegenerator zum Aufzeichnen der Zeitgabesignale im Zusammenhang mit dem Aufzeichnen der Signalbedingungsdarstellungen gekoppelt.

5. Monitorvorrichtung nach Anspruch 2 zur Verwendung in einem Computersystem zum selektiven Erfassen und Aufzeichnen von Bedingungen an ausgewählten Punkten innerhalb des Systems während des Betriebs, welche aufweist:
- eine Einrichtung zum Speichern einer Vielzahl wählbarer Trigger-Freigabecodes, wobei jeder Freigabecode einem TriggerSignal entspricht, welches das Auftreten einer entsprechenden zu erfassenden Bedingung darstellt;
- eine Einrichtung, die mit einer ersten Vielzahl ausgewählter Punkte innerhalb des Systems verbunden ist und auf ausgewählte Bedingungen anspricht, die an den ersten Punkten auftreten, zum Erzeugen von Trigger-Signalen, welche das Auftreten entsprechender ausgewählter Bedingungen darstellen;
- eine Einrichtung, welche auf die Trigger-Freigabecodes und die Trigger-Signale anspricht, zum Bereitstellen von Trigger-Ausgaben nach dem Auftreten eines Trigger-Signals entsprechend einem ausgewählten Trigger-Freigabecode; und
- eine Silobank-Einrichtung, welche mit einer zweiten Vielzahl ausgewählter Punkte innerhalb des Systems verbunden ist und auf die Trigger-Ausgaben anspricht, zum Aufzeichnen der Bedingungen, die an den zweiten Punkten vorliegen.

6. Monitorvorrichtung nach Anspruch 5, wobei die erste Vielzahl ausgewählter Punkte die Leitungen eines ersten Bus des Systems aufweisen.

7. Monitorvorrichtung nach Anspruch 5, wobei die zweite Vielzahl ausgewählter Punkte die Leitungen eines ersten Bus des Systems aufweisen.

8. Monitorvorrichtung nach Anspruch 5, wobei die zweite Vielzahl ausgewählter Punkte die Leitungen eines zweiten Bus des Systems aufweisen.

9. Monitorvorrichtung nach Anspruch 5, wobei der erste Satz ausgewählter Punkte einen ersten Systembus aufweist und die Einrichtung zum Erzeugen von Trigger-Signalen eine Trigger-Speichereinrichtung zum Speichern von Mustern von Trigger-Signalen aufweist, wobei jedes Muster von Trigger-Signalen einer ausgewählten, zu erfassenden Bedingung auf dem ersten Systembus entspricht, wobei die Trigger-Speichereinrichtung aufweist:
- einen ersten Anschluß mit einem Leseadreßeingang, der mit den Leitungen des ersten Systembus verbunden ist, und
- einen Datenausgabeanschluß, der mit der Trigger-Ausgabeeinrichtung verbunden ist, zum Liefern von Mustern von Trigger-Signalen entsprechend den zu erfassenden Busbedingungen,
wobei jedes Muster von Trigger-Signalen in der Trigger-Speichereinrichtungsstelle gespeichert ist, deren Adresse mit dem Muster von Signalen auf dem ersten Systembus entspricht, was die entsprechende zu erfassende Bedingung darstellt.

10. Monitorvorrichtung nach Anspruch 9, wobei die Trigger-Speichereinrichtung eine Dualanschluß-Speichereinrichtung ist und das System weiterhin eine Prozessoreinrichtung zum Erzeugen von Schreibadressen für die Trigger-Speichereinrichtung und zum Liefern von TriggerMustern aufweist, die in die Trigger-Speichereinrichtung zu schreiben sind, und wobei die Trigger-Speichereinrichtung weiterhin aufweist:
- einen zweiten Anschluß mit einem Dateneingang und einem Schreibadreßeingang, der mit der Prozessoreinrichtung verbunden ist, zum Empfangen und Speichern der Trigger-Muster, die von der Prozessor-Einrichtung geliefert werden.

11. Monitorvorrichtung nach Anspruch 5, wobei die Einrichtung zum Speichern von Trigger-Freigabecodes eine Einrichtung zum Speichern einer Vielzahl von Busfreigabecodes aufweist, wobei jeder der Busfreigabecodes einem einer Vielzahl von Bus-Triggersignalen entspricht und wobei jedes der Bus-Triggersignale eine ausgewählte Bedingung auf einem Bus des Systems darstellt.

12. Monitorvorrichtung nach Anspruch 5, wobei die Trigger-Freigabecodes eine Vielzahl von Triggersequenz-Freigabecodes aufweisen, wobei
- jeder der Triggersequenz-Freigabecodes einer sequentiellen Kombination von Triggersignalen entspricht, und wobei
- jedes Triggersignal, welches von einem Triggersequenz-Freigabecode spezifiziert ist, in der Sequenz, welche vom Trigger-Freigabecode festgelegt ist, vorkommen muß.

13. Monitorvorrichtung nach Anspruch 5, wobei die Silobank-Einrichtung eine Vielzahl von Subsilo-Einrichtungen aufweist, von denen jede einem entsprechenden der zweiten ausgewählten Punkte entspricht und die dort vorliegenden Bedingungen aufzeichnet, und wobei jede der Subsiloeinrichtungen aufweist:
- eine statische Speichereinrichtung mit Dateneingängen, die mit einem entsprechenden der zweiten ausgewählten Punkte verbunden ist, und
- eine dynamische Speichereinrichtung mit Dateneingängen, die mit Datenausgängen der statischen Speichereinrichtung verbunden ist,
wobei die Subsilo-Einrichtungen auf die entsprechenden Trigger-Ausgaben ansprechen, und zwar zum
- Aufnehmen der Bedingungen, die an den ausgewählten zweiten Punkten vorliegen, in die statische Speichereinrichtung und
- Transferieren der aufgenommenen Bedingungen in die dynamische Speichereinrichtung zum Aufzeichnen der aufgenommenen Bedingungen.

## Revendications

1. Appareil de surveillance pour détecter sélectivement des conditions de signaux en des points dans un système opérationnel, caractérisé par :
- un circuit de lecture de conditions (92) couplé à un premier ensemble de points dans ledit système pour lire des conditions de signaux prédéterminées audit premier ensemble de points et pour générer des signaux de sortie d'un premier type (A - H) lors de l'occurrence desdites conditions prédéterminées;
- un circuit de validation (90) pour mémoriser une pluralité de codes correspondant à différents signaux desdits signaux de sortie du premier type et pour délivrer des signaux de sortie d'un deuxième type représentant lesdits codes; et
- un circuit de détection (96, 98) couplé audit circuit de lecture de conditions et audit circuit de validation, et sensible auxdits signaux du premier type et du deuxième type pour générer des signaux de sortie d'un troisième type lors de l'occurrence de signaux de sortie du premier type correspondant auxdits signaux de sortie du deuxième type.

2. Appareil de surveillance selon la revendication 1 prévoyant en outre l'enregistrement de conditions de signaux en certains points dans ledit système opérationnel, caractérisé par :
- des moyens de stockage (40) couplés à un deuxième ensemble de points dans ledit système et audit circuit de détection, et sensibles auxdits signaux du troisième type pour enregistrer des représentations des conditions de signaux présentes audit deuxième ensemble de points.

3. Appareil de surveillance selon la revendication 1, caractérisé en outre par :
- ledit circuit de lecture de conditions (92) comprenant une mémoire adressable pour conserver dans ses cellules adressables différents profils de signaux de sortie du premier type; et
- des moyens pour appliquer lesdites conditions de signaux audit premier ensemble de points en tant qu'adresse à ladite mémoire adressable.

4. Appareil de surveillance selon la revendication 2, caractérisé en outre par :
- un générateur de synchronisation (100) pour générer des signaux de synchronisation représentant les temps relatifs d'occurrence d'événements dans ledit appareil de surveillance; et
- lesdits moyens de stockage (40) couplés en outre audit générateur de synchronisation pour enregistrer lesdits signaux de synchronisation en association avec l'enregistrement desdites représentations des conditions de signaux.

5. Appareil de surveillance selon la revendication 2 destiné à être utilisé dans un système informatique pour détecter sélectivement et enregistrer des conditions en des points sélectionnés dans le système durant son fonctionnement, comprenant :
- des moyens pour mémoriser une pluralité de codes de validation de déclenchement pouvant être sélectionnés, chaque code de validation correspondant à un signal de déclenchement représentant l'occurrence d'une condition correspondante devant être détectée;
- des moyens connectés à une première pluralité de points sélectionnés dans le système et sensibles à des conditions sélectionnées se produisant aux premiers points pour générer des signaux de déclenchement représentant l'occurrence de conditions sélectionnées correspondantes;
- des moyens sensibles aux codes de validation de déclenchement et aux signaux de déclenchement pour fournir des sorties de déclenchement lors de l'occurrence d'un signal de déclenchement correspondant à un code de validation de déclenchement sélectionné; et
- des moyens à groupe de silos connectés à une deuxième pluralité de points sélectionnés dans le système et sensibles aux sorties de déclenchement pour enregistrer les conditions présentes aux deuxièmes points.

6. Appareil de surveillance selon la revendication 5, dans lequel la première pluralité de points sélectionnés comprend les lignes d'un premier bus du système.

7. Appareil de surveillance selon la revendication 5, dans lequel la deuxième pluralité de points sélectionnés comprend les lignes d'un premier bus du système.

8. Appareil de surveillance selon la revendication 5, dans lequel la deuxième pluralité de points sélectionnés comprend les lignes d'un deuxième bus du système.

9. Appareil de surveillance selon la revendication 5, dans lequel le premier ensemble de points sélectionnés comporte un premier bus du système, et les moyens pour générer des signaux de déclenchement comprennent des moyens de mémoire de déclenchement pour mémoriser des profils de signaux de déclenchement, chaque profil de signaux de déclenchement correspondant à une condition sélectionnée devant être détectée sur le premier bus du système, dans lequel les moyens de mémoire de déclenchement comportent :
- un premier port ayant une entrée d'adresse de lecture connectée aux lignes du premier bus du système; et
- un port de sortie de données connecté aux moyens de sortie de déclenchement pour fournir des profils de signaux de déclenchement correspondant aux conditions de bus devant être détectées,
dans lequel chaque profil de signaux de déclenchement est mémorisé dans la position des moyens de mémoire de déclenchement dont l'adresse correspond au profil de signaux sur le premier bus du système représentant la condition correspondante devant être détectée.

10. Appareil de surveillance selon la revendication 9, dans lequel les moyens de mémoire de déclenchement sont des moyens de mémoire a double accès, et le système comprend en outre des moyens de traitement pour générer des adresses d'écriture pour les moyens de mémoire de déclenchement et pour fournir des profils de déclenchement devant être écrits dans les moyens de mémoire de déclenchement, et dans lequel les moyens de mémoire de déclenchement comprennent en outre :
- un deuxième port ayant une entrée de données et une entrée d'adresse d'écriture connectées aux moyens de traitement pour recevoir et mémoriser les profils de déclenchement fournis par les moyens de traitement.

11. Appareil de surveillance selon la revendication 5, dans lequel les moyens pour mémoriser des codes de validation de déclenchement comprennent des moyens pour mémoriser une pluralité de codes de validation de bus, dans lequel chacun des codes de validation de bus correspond à l'un parmi une pluralité de signaux de déclenchement de bus, et chacun des signaux de déclenchement de bus représente une condition sélectionnée sur un bus du système.

12. Appareil de surveillance selon la revendication 5, dans lequel les codes de validation de déclenchement comprennent une pluralité de codes de validation de séquence de déclenchement, dans lequel :
- chacun des codes de validation de séquence de déclenchement correspond à une combinaison séquentielle de signaux de déclenchement, et dans lequel
- chaque signal de déclenchement spécifié par un code de validation de séquence de déclenchement doit se produire dans la séquence définie par le code de validation de déclenchement.

13. Appareil de surveillance selon la revendication 5, dans lequel les moyens de groupe de silos comprennent une pluralité de moyens de sous-silos, chacun d'eux correspondant aux et enregistrant les conditions présentes à un point correspondant des deuxièmes points sélectionnés, et dans lequel chacun des moyens de sous-silos comprend :
- des moyens de mémoire statique ayant des entrées de données connectées à un point correspondant des deuxièmes points sélectionnés; et
- des moyens de mémoire dynamique ayant des entrées de données connectées aux sorties de données des moyens de mémoire statique,
dans lequel les moyens de sous-silos sont sensibles aux sorties de déclenchement correspondantes pour :
- saisir les conditions présentes aux deuxièmes points sélectionnés dans les moyens de mémoire statique; et
- transférer les conditions saisies dans les moyens de mémoire dynamique pour enregistrer les conditions saisies.
